# EUROPÄISCHE PATENTSCHRIFT

(11) **EP 3 463 746 B1**
(45) Veröffentlichungstag und Bekanntmachung des Hinweises auf die Patenterteilung: **04.05.2022**
(21) Anmeldenummer: 17730667.7
(22) Anmeldetag: 07.06.2017
(51) Int. Cl.: B23Q 1/62, B24B 13/06, B24B 27/00, B24B 41/04, B24B 47/12, B23Q 39/00

(54) **MASCHINE ZUR BEARBEITUNG VON OPTISCH WIRKSAMEN FLÄCHEN**
MACHINE FOR PROCESSING OPTICALLY EFFECTIVE SURFACES
MACHINE POUR LE TRAITEMENT DES SURFACES À EFFET OPTIQUE

(30) Priorität: 07.06.2016 DE 102016006791
(43) Veröffentlichungstag der Anmeldung: 10.04.2019
(73) Patentinhaber: Satisloh AG, 6340 Baar (CH)
(72) Erfinder: DIEHL, Joachim, 35398 Giessen - Allendorf (DE); HOFMANN, Alexander, 50935 Köln (DE); MOOS, Steffen, 35435 Wettenberg (DE)
(74) Vertreter: Oppermann, Mark
(86) Internationale Anmeldenummer: PCT/EP2017/000660
(87) Internationale Veröffentlichungsnummer: WO 2017/211452

(56) Entgegenhaltungen:
- EP-A1- 0 072 887
- EP-A2- 1 127 646
- EP-A2- 1 243 380
- DE-A1-102006 028 164
- DE-A1-102012 004 547

## Beschreibung

### TECHNISCHES GEBIET

Die vorliegende Erfindung bezieht sich allgemein auf eine Maschine zur Bearbeitung von optisch wirksamen Flächen an Werkstücken gemäß dem Oberbegriff des Patentanspruchs 1. Insbesondere bezieht sich die Erfindung auf eine Maschine zum Schleifen und/oder Polieren, wie sie z.B. in der feinoptischen Industrie bei der Linsen-, Spiegel- oder Gießformenproduktion in großem Umfang zum Einsatz kommen.

### STAND DER TECHNIK

Die spanende Bearbeitung von Werkstücken in optischer Qualität kann grob in zwei Bearbeitungsphasen unterteilt werden, nämlich zunächst die Vorbearbeitung der optisch wirksamen Fläche zur Erzeugung der gewünschten Makrogeometrie (bzw. Topografie) und sodann die Feinbearbeitung der optisch wirksamen Fläche, um Vorbearbeitungsspuren zu beseitigen und die gewünschte Mikrogeometrie zu erhalten. Während die Vorbearbeitung der optisch wirksamen Flächen zur Formgebung u.a. in Abhängigkeit vom Material der Werkstücke durch Schleifen (z.B. bei Linsen aus Mineralglas), Fräsen (beispielsweise bei metallischen Formeinsätzen) und/oder Drehen (etwa bei Kunststofflinsen) erfolgt, werden die optisch wirksamen Flächen der Werkstücke bei der Feinbearbeitung zur Erzielung der gewünschten Oberflächenrauhigkeit üblicherweise einem Feinschleif-, Läpp- und/oder Poliervorgang unterzogen. Soweit im Sprachgebrauch der vorliegenden Anmeldung allgemein der Begriff "Bearbeitung", auch in Wortzusammensetzungen wie z.B. "Bearbeitungswerkzeug" od.dgl., verwendet wird, soll dies die spanende Vor- und Feinbearbeitung umfassen, vornehmlich mit geometrisch unbestimmter Schneide und gebundenem Korn (Schleifen) bzw. losem Korn (Polieren).

Für die Durchführung komplexer Bearbeitungsabläufe sind heute eine oder ggf. mehrere Maschinen mit einer großen Anzahl präzise laufender Werkzeuge erforderlich. Da der Wechsel von einer auf eine nachgeschaltete Maschine Zeit erfordert und durch zum Teil unterschiedliche Spannsysteme zur Werkstückhalterung auch die Gefahr von Umspannfehlern birgt, sind im Stand der Technik schon Maschinen vorgeschlagen worden, die mit mehreren Bearbeitungsspindeln ausgerüstet sind.

So offenbart die Druckschrift DE 197 50 428 A1 eine Vorrichtung zum beidseitigen Polieren optischer Linsen, bei der an einem Maschinenrahmen im oberen Teil ein Schwenkkopf vorhanden ist, der um eine Schwenkachse schwenkbar ist und eine Werkzeugspindel für ein oberes Formwerkzeug zur Bearbeitung einer konvexen Linsenoberfläche sowie eine "Kombispindel" für ein oberes "Kombiwerkzeug" trägt, welches ein inneres Abrichtwerkzeug und eine äußere Werkstückaufnahme aufweist. Im unteren Teil des Maschinenrahmens ist ein horizontal beweglicher X-Schlitten angeordnet, der mit einem vertikal beweglichen Z-Schlitten verbunden ist, welcher seinerseits eine weitere Werkzeugspindel für ein unteres Formwerkzeug zur Bearbeitung einer konkaven Linsenoberfläche sowie eine weitere "Kombispindel" für ein unteres "Kombiwerkzeug" trägt. Letzteres besitzt ebenfalls ein innen liegendes Abrichtwerkzeug und eine außen liegende Werkstückaufnahme.

Mit dieser Vorrichtung können (a) beide Formwerkzeuge mit dem jeweils gegenüberliegenden Abrichtwerkzeug des entsprechenden "Kombiwerkzeugs" abgerichtet werden, (b) eine zunächst in der Werkstückaufnahme des unteren "Kombiwerkzeugs" gehaltene Linse mit dem oberen Formwerkzeug an ihrer konvexen Linsenoberfläche bearbeitet werden, (c) die Linse von der Werkstückaufnahme des unteren "Kombiwerkzeugs" in die Werkstückaufnahme des oberen "Kombiwerkzeugs" übergeben werden, und schließlich (d) die sodann in der Werkstückaufnahme des oberen "Kombiwerkzeugs" gehaltene Linse mit dem unteren Formwerkzeug an ihrer konkaven Linsenoberfläche bearbeitet werden. Ein Nachteil dieser Vorrichtung ist indes darin zu sehen, dass sie insbesondere infolge der räumlichen Nähe der Spindeln des jeweiligen Spindelpaars am Schwenkkopf bzw. am Z-Schlitten und der Länge der am Schwenkkopf angebrachten Spindeln sowohl hinsichtlich der bearbeitbaren Werkstückgeometrien als auch im Hinblick auf die Größe der zu bearbeitenden Werkstücke stark limitiert ist.

Eine diesem Stand der Technik gegenüber schon deutlich flexiblere Schleif- und Poliermaschine zum Schleifen und/oder Polieren von Werkstücken in optischer Qualität, insbesondere von Linsen, ist aus der Druckschrift DE 10 2006 028 164 A1 bekannt, die den Oberbegriff des Patentanspruchs 1 bildet. Diese Maschine umfasst in sehr kompakter Bauweise zwei Werkstückspindeln, über die jeweils ein zu bearbeitendes Werkstück um eine Werkstück-Drehachse drehend angetrieben werden kann, und einen den Werkstückspindeln gegenüberliegenden Schwenkkopf, der um eine Schwenkachse verschwenkbar ist. Der Schwenkkopf trägt zwei parallel angeordnete Werkzeugspindeln, von denen jede an beiden Enden zur gleichachsigen Aufnahme jeweils eines Bearbeitungswerkzeugs ausgebildet ist und um je eine quer zur Schwenkachse verlaufende Werkzeug-Drehachse drehend angetrieben werden kann. Die Werkstückspindeln und der Schwenkkopf sind zudem relativ zueinander entlang drei senkrecht zueinander stehenden Linearachsen verstellbar, von denen eine Linearachse (Y) parallel zur Schwenkachse verläuft, während eine andere Linearachse (Z) sich parallel zu den Werkstück-Drehachsen erstreckt.

Bei diesem Stand der Technik können in vorteilhafter Weise die Werkzeugspindeln über den Schwenkkopf bezüglich der Werkstückspindeln sowohl statisch als auch dynamisch in beliebige definierte Winkelpositionen zwischen 0° und 360° verdreht werden, wobei z.B. ein Werkzeugwechsel durch Verschwenken des Schwenckopfs um ca. 180° um die Schwenkachse erfolgen kann, so dass an ein und derselben Werkstückfläche ein nachgeschalteter Bearbeitungsschritt ermöglicht wird. Außerdem können aufgrund der im Vergleich zum eingangs geschilderten Stand der Technik zusätzlichen, parallel zur Schwenkachse verlaufenden Linearachse (Y) weitere Werkstückgeometrien bearbeitet werden, was insbesondere in Anbetracht des Umstands von Vorteil ist, dass in der feinoptischen Industrie ein starker Trend hin zu komplexeren Bauteilen, namentlich mit asphärischen Flächen und Freiformflächen zu beobachten ist.

Die Bearbeitungsmöglichkeiten finden beim gattungsbildenden Stand der Technik allerdings ihre Grenzen, wenn sehr große Werkstücke bzw. Werkstücke mit großen Topografieänderungen zu bearbeiten sind. Aufgrund der Bauform der Werkzeugspindeln und der Notwendigkeit einer steifen Spindellagerung ergeben sich am Schwenkkopf nämlich Störkonturen, welche die Bearbeitung solcher Werkstücke bislang verhindern, andernfalls die Gefahr einer Beschädigung von Maschine und/oder Werkstück infolge ungewollter Kollisionen zwischen Spindelgehäuse und Werkstück besteht.

Schließlich offenbart die Druckschrift EP 0 072 887 A1 eine programmgesteuerte Werkzeugschleifmaschine zum Schleifen von rundlaufenden Werkzeugen, beispielsweise Fräsern und Bohrern. Die Werkzeugschleifmaschine verfügt über einen Schleifkopf, der auf einem Maschinengestell längs einer ersten Vertikalachse Y verstellbar und um diese verdrehbar gelagert ist. Der Schleifkopf weist eine angetriebene erste Schleifspindel auf, die mit ihrer Achse in einer vertikalen Schwenkebene schwenkbar gelagert ist und endseitig eine Schleifscheibe trägt. In einem Abstand von dem Schleifkopf ist auf einem Rundtisch ein Werkzeugträger angeordnet, der einen Kreuzschlitten aufweist, weleher um eine durch den Rundtisch definierte zweite Vertikalachse C schwenkbar und in einer Horizontalebene verstellbar ist. Auf dem Kreuzschlitten ist eine mit einer programmgesteuerten Antriebsvorrichtung gekuppelte Werkzeugaufnahmespindel drehbar gelagert. Der Rundtisch ist längs einer quer zu dem Schleifkopf verlaufenden ersten Horizontalachse X verstellbar, während der Schleifkopf längs einer rechtwinklig zur ersten Horizontalachse X verlaufenden zweiten Horizontalachse Z verstellbar ist. Um mit geringem technischen Aufwand auch an komplizierten Werkzeugen alle Schleifvorgänge mit einer Werkzeugspannung programmgesteuert selbsttätig durchführen zu können, weist der Schleifkopf wenigstens drei getrennte Schleifscheiben auf, die auf zumindest zwei getrennt angetriebenen Schleifspindeln sitzen und programmgesteuert nacheinander mit der jeweils richtigen räumlichen Ausrichtung mit dem Werkstück in Eingriff gebracht werden können. Dabei ist wenigstens eine der Schleifspindeln mit ihrer Achse im Wesentlichen in einer Horizontalebene liegend angeordnet.

### AUFGABENSTELLUNG

Der Erfindung liegt die Aufgabe zugrunde, eine tunlichst kompakt ausgebildete Maschine zur Bearbeitung von optisch wirksamen Flächen an Werkstücken zu schaffen, die möglichst vielfältig einsetzbar ist und damit unterschiedliche Bearbeitungsstrategien erlaubt, insbesondere auch die Bearbeitung von großen Werkstücken bzw. Werkstücken mit großen Topografieänderungen bei hoher Genauigkeit.

### DARSTELLUNG DER ERFINDUNG

Diese Aufgabe wird durch die im Patentanspruch 1 angegebenen Merkmale gelöst. Vorteilhafte oder zweckmäßige Weiterbildungen der Erfindung sind Gegenstand der Patentansprüche 2 bis 15.

Bei einer Maschine zur Bearbeitung von optischen wirksamen Flächen an Werkstücken, die wenigstens eine Werkstückspindel hat, über die ein zu bearbeitendes Werkstück um eine Werkstück-Drehachse C drehend antreibbar ist, und einen der Werkstückspindel gegenüberliegenden Schwenkkopf aufweist, der um eine Schwenkachse B verschwenkbar ist und mindestens zwei Werkzeugspindeln trägt, an denen jeweils zumindest ein Bearbeitungswerkzeug um eine Werkzeug-Drehachse D, D' drehend antreibbar gehalten ist, wobei die Werkstückspindel und der Schwenkkopf zudem relativ zueinander entlang drei senkrecht zueinander stehenden Linearachsen X, Y, Z verstellbar sind, von denen eine Linearachse Y parallel zur Schwenkachse B verläuft, und wobei sich die Werkstück-Drehachse C parallel zu einer anderen Linearachse Z der Linearachsen X, Y, Z erstreckt; ist erfindungsgemäß wenigstens eine Werkzeugspindel mit ihrer Werkzeug-Drehachse D' parallel zur Schwenkachse B verlaufend am Schwenkkopf angebracht.

Durch die rotationsparallele Anordnung von Werkzeugspindel und Schwenkkopf ist es möglich, einen Eingriffsbereich am Umfang des an dieser Werkzeugspindel gehaltenen Bearbeitungswerkzeugs, mit dem das Bearbeitungswerkzeug mit einem an der Werkstückspindel gehaltenen, zu bearbeitenden Werkstück in Bearbeitungseingriff gebracht werden kann, bezogen auf die Schwenkachse B des Schwenkkopfs und die andere Werkzeugspindel am Schwenkkopf in einer mit der dritten Linearachse X ausgefluchteten Bearbeitungsebene quer zur Schwenkachse B nach radial außen zu verlagern, weggewandt von der anderen Werkzeugspindel. Auf diese Weise ergibt sich eine sehr kompakte Schwenkkopf/Werkzeugspindel-Kombination, die ohne eigene große räumliche Ausdehnung bei der Bearbeitung einen maximal großen "Flugkreis" der Bearbeitungswerkzeuge ermöglicht. Infolgedessen können auch sehr große Werkstücke oder Werkstücke mit großen Topografieänderungen und/oder starken Steigungen problemlos mit langen Verfahrwegen entlang der Linearachse X und/oder großen Schwenkwinkeln um die Schwenkachse B bearbeitet werden, ohne die Gefahr von Kollisionen zwischen dem Schwenkkopf bzw. den daran angebrachten Werkzeugspindeln und dem Werkstück.

Als Bearbeitungswerkzeuge an der bezüglich der Schwenkachse B parallel angeordneten Werkzeugspindel kommen sowohl Schleifwie auch Polierwerkzeuge in Frage. Diese können kugelförmig sein, oder auch nur einen kugelsegment- oder kugelabschnittsförmigen Eingriffsbereich zum Werkstück aufweisen, oder scheibenförmig sein. Bei Verwendung etwa einer Umfangsschleifscheibe ist eine separate Randbearbeitung möglich, so dass in nachgeschalteten Bearbeitungsprozessen die Werkstücke leichter und genauer ausgerichtet werden können, was insbesondere für Messaufgaben wichtig ist. Unter Zuhilfenahme dieser Werkzeugspindel und geeigneter Bearbeitungswerkzeuge können ferner Facetten an Werkstücken angearbeitet werden, und zwar sowohl an runden Werkstücken wie auch an Werkstücken mit beliebiger Randgeometrie, da die Gefahr einer unbeabsichtigten Kollision mit anderen Bearbeitungswerkzeugen oder Spindelbauteilen minimiert ist.

In Summe ermöglicht es das erfindungsgemäße Konzept, mit geringem konstruktiv-technischen Aufwand verschiedenste Bearbeitungswerkzeuge genau laufend mit dem jeweils zu bearbeitenden Werkstück in Eingriff zu bringen, so dass eine große Anzahl komplexer Oberflächen und Bauelemente unter weitgehender Vermeidung von Sonderwerkzeugen bearbeitet werden kann. Insbesondere sind alle gängigen Schleif- und Polierverfahren durchführbar, umfassend eine Drehumfangsquer- und -längsbearbeitung, ein Außenrundschleifen und -polieren, ein Topfschleifen und ein Stirnschleifen und -polieren. Bei Verwendung besonders schmaler Schleifscheiben ergibt sich zudem die Möglichkeit des Sägens bzw. Trennens, so dass z.B. auch Prismen hergestellt werden können.

Vorzugsweise ist die Anordnung der Werkzeugspindeln am Schwenckopf so getroffen, dass der Eingriffsbereich wenigstens eines der daran gehaltenen Bearbeitungswerkzeuge, der mit dem Werkstück in Bearbeitungseingriff bringbar ist, um die Schwenkachse B einen radial äußeren Flugkreis des Schwenkkopfs definiert, d.h. einen Flugkreis, über den kein anderes Bearbeitungswerkzeug oder Spindelteil vorsteht. Somit kann von diesem Bearbeitungswerkzeug vorteilhaft durch eine reine Schwenkbewegung des Schwenkkopfs um die Schwenkachse B schnell auf ein anderes Bearbeitungswerkzeug gewechselt werden, ohne dass hierfür eine Linearwegplanung oder lineare Ausweichsbewegungen nötig wären.

Im weiteren Verfolg des Erfindungsgedankens können die Eingriffsbereiche aller Bearbeitungswerkzeuge im Wesentlichen den gleichen radialen Abstand zur Schwenkachse B besitzen. Durch Verschwenken des Schwenkkopfs um die Schwenkachse B ist damit ein Wechsel zwischen beliebigen Bearbeitungswerkzeugen am Schwenkkopf möglich; größere Linearbewegungen sind hierfür nicht notwendig, wodurch Prozessnebenzeiten minimiert werden.

Des Weiteren kann die Anordnung so getroffen sein, dass die Eingriffsbereiche der Bearbeitungswerkzeuge bezüglich der Schwenkachse B im Wesentlichen gleichmäßig voneinander winkelbeabstandet sind. Dies sorgt in vorteilhafter Weise für minimale Störkonturen am Schwenkkopf. Die einzelnen Bearbeitungswerkzeuge können gleichermaßen weit um die Schwenkachse B verschwenkt werden, was wiederum im Hinblick auf die Bearbeitung von großen Werkstücken und/oder Oberflächen mit großen Höhenunterschieden von Vorteil ist.

Ferner ist vorzugsweise wenigstens eine (weitere) Werkzeugspindel mit ihrer Werkzeug-Drehachse D quer zur Schwenkachse B verlaufend am Schwenkkopf angebracht, wodurch der Einsatz von z.B. Topfwerkzeugen möglich ist. Dies ist einer möglichst großen Vielfalt an Bearbeitungsprozessen und -strategien förderlich. Hierbei kann die Werkzeugspindel prinzipiell an lediglich einem Ende zur Aufnahme eines Bearbeitungswerkzeugs ausgebildet sein. Bevorzugt ist demgegenüber indes eine Ausgestaltung, bei der die Werkzeugspindel mit der quer zur Schwenkachse B verlaufenden Werkzeug-Drehachse D an beiden Enden zur gleichachsigen Aufnahme jeweils eines Bearbeitungswerkzeugs ausgebildet ist. Somit können in platzsparender und kostengünstiger Weise zwei Bearbeitungswerkzeuge mit nur einem Antrieb angetrieben werden. Wird z.B. an der Werkzeugspindel mit der parallel zur Schwenkachse B verlaufenden Werkzeug-Drehachse D' ein kugel- oder scheibenförmiges Schleifwerkzeug eingesetzt, während die Werkzeugspindel mit der quer zur Schwenkachse B verlaufenden Werkzeug-Drehachse D an beiden Enden mit Topfwerkzeugen bestückt ist, sind vorteilhaft in einer Werkstück-Aufspannung mehrere aufeinanderfolgende Bearbeitungsschritte möglich. So etwa ein Vorschleifen mit dem ersten Topfwerkzeug, ein Feinschleifen mit dem zweiten Topfwerkzeug und schließlich eine Feinstbearbeitung mit dem parallel zur Schwenkachse B rotierenden Kugel- bzw. Schleifscheibenwerkzeug, wodurch sich insgesamt eine hohe Flächentreue, zugleich eine Erhöhung der einzelnen Werkzeugstandzeiten und somit auch eine höhere Maschinenverfügbarkeit und Produktivität ergeben.

Vorzugsweise liegt ein Massenschwerpunkt des die Werkzeugspindeln tragenden Schwenkkopfs auf oder zumindest nahe der Schwenkachse B, also in unmittelbarer Nähe derselben. Dies hat den Vorteil, dass zum Verschwenken des Schwenkkopfs um die Schwenkachse B nur eine geringe Antriebsleistung notwendig ist. Außerdem werden so Exzentrizitäten am Schwenkkopf vermieden, die einer hohen Bearbeitungsgenauigkeit abträglich sein könnten. Bearbeitungsprozesse, die während des Eingriffs des Bearbeitungswerkzeugs mit dem Werkstück ein Verschwenken des Schwenkkopfs um die Schwenkachse B erfordern, können vorteilhaft mit hoher Dynamik ausgeführt werden.

Für den Drehantrieb der Werkzeugspindel mit der parallel zur Schwenkachse B verlaufenden Werkzeug-Drehachse D' sind verschiedene, kurz bauende Antriebskonzepte möglich, z.B. ein Kettenantrieb oder ein Antrieb über ein Zahnradgetriebe. Für die Erzielung hoher Drehzahlen bei geringem Verschleiß und großer Laufruhe bevorzugt ist es allerdings, wenn zum Drehantrieb der Werkzeugspindel mit der parallel zur Schwenkachse B verlaufenden Werkzeug-Drehachse D' ein Riementrieb vorgesehen ist, mit einem parallel zur Spindelwelle angeordneten Spindelmotor, der über einen Riemen mit der Spindelwelle antriebsverbunden ist.

Grundsätzlich ist es denkbar, in diesem Fall zum Spannen des Riemens eine Spannrolle zwischen Spindelmotor und Spindelwelle vorzusehen. Im Hinblick auf einen möglichst geringen Aufwand und eine sehr kompakte Bauform bevorzugt ist es indes, wenn zur Spannung des Riemens der Spindelmotor relativ zur Spindelwelle verschwenkbar gelagert ist.

Vorzugsweise handelt es sich bei dem Riemen eines solchen Riementriebs um einen Poly-V-Riemen. Derartige Riemen bieten eine hohe Kraftübertragung auf wenig Raum bei höchster Stabilität sowie Laufruhe, und dies auch bei hohen Antriebsgeschwindigkeiten.

Prinzipiell kann für die Verstellung der Werkstückspindel entlang der Linearachse Z ein Kugelgewindetrieb od.dgl. eingesetzt werden. Demgegenüber bevorzugt ist es jedoch, die Werkstückspindel zur Verstellung entlang der Linearachse Z an einem über eine Führungsanordnung an einem Maschinenbett geführten Z-Schlitten anzubringen, der vermittels eines Linearmotors relativ zum Maschinenbett bewegbar ist. Der Einsatz eines Linearmotors zur Axialbewegung der Werkstückspindel ist nicht nur insofern vorteilhaft, als die Nachstellung ohne Umkehrspindel dynamischer und genauer erfolgen kann, sondern insbesondere auch deshalb, weil ein kraftgeregelter Schleifprozess durchgeführt werden kann, wie er in der Druckschrift DE 10 2012 010 004 A1 beschrieben ist. Mit einem solchen Prozess, bei dem dem Linearmotor eine variable Vorschubkraft über den Motorstrom vorgegeben, anhand der Soll- und Ist-Richtungen der Vorschubbewegung auf die aktuellen Kraftverhältnisse geschlossen und daraus resultierend die Vorschubkraft prozessabhängig über den Motorstrom beeinflusst wird, wird insbesondere die Abtragsleistung beim Schleifen optimiert. Es ergeben sich in vorteilhafter Weise deutliche Verkürzungen der Prozesszeiten, ein Wegfall von Sicherheitsabständen, eine einfache Anschnitterkennung sowie eine sichere Verhinderung von Überlastungszuständen von Werkstück und Werkzeug durch zu hohe Vorschubgeschwindigkeiten oder durch Kollisionen.

Ferner kann die Führungsanordnung für den Z-Schlitten mit Klemmelementen ausgerüstet sein, über die der Z-Schlitten relativ zum Maschinenbett festlegbar ist. Mittels derartiger Maßnahmen kann bei einem Not-Aus oder Servo-Off (Antriebe-Aus) der Maschine ein unerwünschtes Absinken des Z-Schlittens vermieden werden. Außerdem kann so für bestimmte Bearbeitungsvorgänge, wie z.B. Trennprozesse, die Linearachse Z in energetisch günstiger Weise festgesetzt werden, auch um die Steifigkeit bei der Bearbeitung zu erhöhen.

Vorzugsweise ist die Maschine ferner mit einer Einrichtung zum Gewichtsausgleich für den die Werkstückspindel tragenden Z-Schlitten versehen. Hierdurch können Bearbeitungsprozesse vorteilhaft mit besonders hoher Dynamik gefahren werden, ohne die Gefahr schwerkraftbedingter "Überschwinger" bei der Bewegung entlang der Linearachse Z. Grundsätzlich ist es denkbar, als Einrichtung zum Gewichtsausgleich ein Gegengewicht einzusetzen, welches über einen Umlenk- und Bremsmechanismus den Z-Schlitten mit der daran angebrachten Werkstückspindel gegenhält. Im Hinblick auf eine kompakte Ausgestaltung, schnelle Reaktionszeiten und eine gute Steuerbarkeit bevorzugt ist es allerdings, wenn die Einrichtung zum Gewichtsausgleich wenigstens einen Pneumatikzylinder aufweist, der zwischen dem Z-Schlitten und dem Maschinenbett angeordnet und pneumatisch beaufschlagbar ist, um das Gewicht des die Werkstückspindel tragenden Z-Schlittens gegenzuhalten. Dies ermöglicht eine feinfühlige Einstellung der Position des Z-Schlittens mittels des Linearmotors und unterstützt zudem den oben angesprochenen kraftgeregelten Schleifprozess unter Zuhilfenahme des Linearmotors.

In einer weiteren, bevorzugten Ausbaustufe kann der Schwenkkopf schließlich mit einem Funktionselement zur Erfassung der Werkstückgeometrie versehen sein. Hierbei kann es sich z.B. um einen Taster oder einen Ringsphärometer gemäß DIN 58724 handeln, der seitlich außen am Schwenkkopf bzw. einem der Gehäuse der Werkzeugspindeln angebracht ist. Auf diese Weise können - ohne zusätzliche Bewegungsachsen - Messungen der Werkstückgeometrie unmittelbar vor, während oder nach verschiedenen Schleifschritten *in situ* durchgeführt und etwa erforderliche Korrekturen automatisch von der CNC-Steuerung berücksichtigt werden. Durch die über den Schwenkkopf gegebene Schwenkbarkeit des Tasters bzw. des Sphärometers um die Schwenkachse B ist es möglich, das jeweilige Funktionselement normalgerichtet auf jeden beliebigen Punkt des Werkstücks aufzusetzen, wodurch nicht zuletzt Fehlmessungen bedingt durch schräges Antasten vermieden werden.

### KURZE BESCHREIBUNG DER ZEICHNUNGEN

Im Folgenden wird die Erfindung anhand bevorzugter Ausführungsbeispiele unter Bezugnahme auf die beigefügten, teilweise vereinfachten bzw. schematischen und nicht maßstabsgerechten Zeichnungen näher erläutert, wobei gleiche oder entsprechende Teile mit denselben Bezugszeichen versehen sind. In den Zeichnungen zeigen:

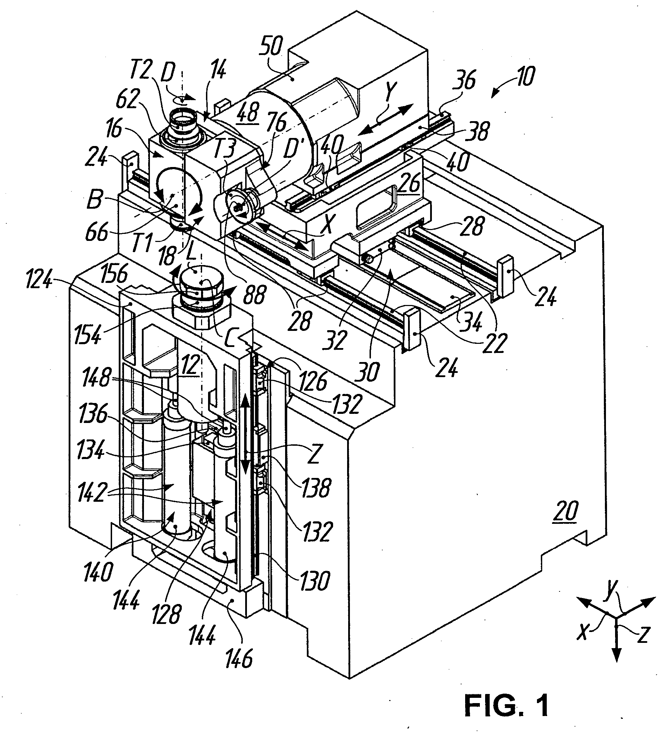

- Fig. 1: eine perspektivische Ansicht einer Schleif- und Poliermaschine zur Feinbearbeitung von optisch wirksamen Flächen an Werkstücken von schräg oben / vorne rechts, mit einer unteren, über einen Z-Schlitten vertikal verstellbaren Werkstückspindel und einem oberen, über eine X-Y-Kreuztisch-Anordnung in einer horizontalen Ebene verstellbaren Schwenkkopf nach einem ersten Ausführungsbeispiel, der um eine horizontal verlaufende Schwenkachse B verschwenkbar ist und zwei Werkzeugspindeln trägt, deren Werkzeug-Drehachsen D, D' verschieden ausgerichtet sind, wobei zur Freigabe der Sicht auf wesentliche Bauteile bzw. Baugruppen der Maschine und zur Vereinfachung der Darstellung insbesondere die Bedieneinheit und Steuerung, Verkleidungsteile, Türmechanismen und Scheiben, Ablagen für Werkstücke und Werkzeuge, die Versorgungseinrichtungen (einschließlich Leitungen, Schläuche und Rohre) für Strom, Druckluft und Poliermittel, der Poliermittelrücklauf sowie die maschineninternen Mess-, Wartungsund Sicherheitseinrichtungen weggelassen wurden;

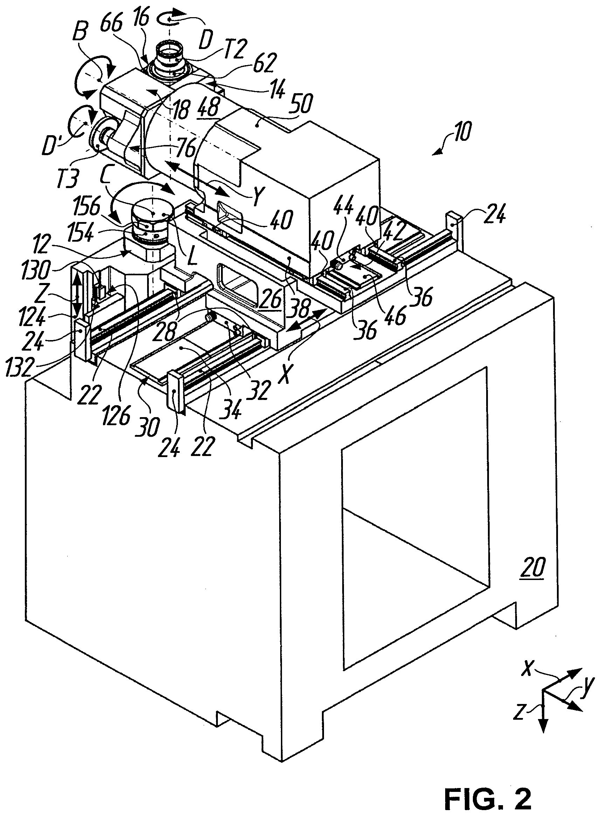

- Fig. 2: eine perspektivische Ansicht der Schleif- und Poliermaschine gemäß Fig. 1 von schräg oben / hinten links, mit den Vereinfachungen der Fig. 1;

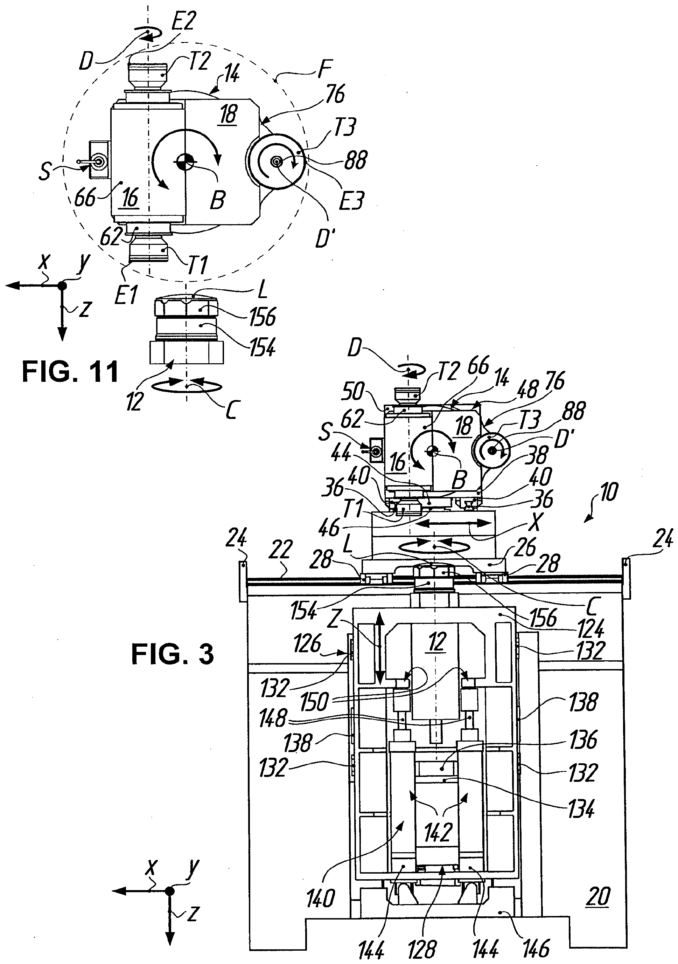

- Fig. 3: eine Frontansicht der Schleif- und Poliermaschine gemäß Fig. 1, mit den Vereinfachungen der Fig. 1;

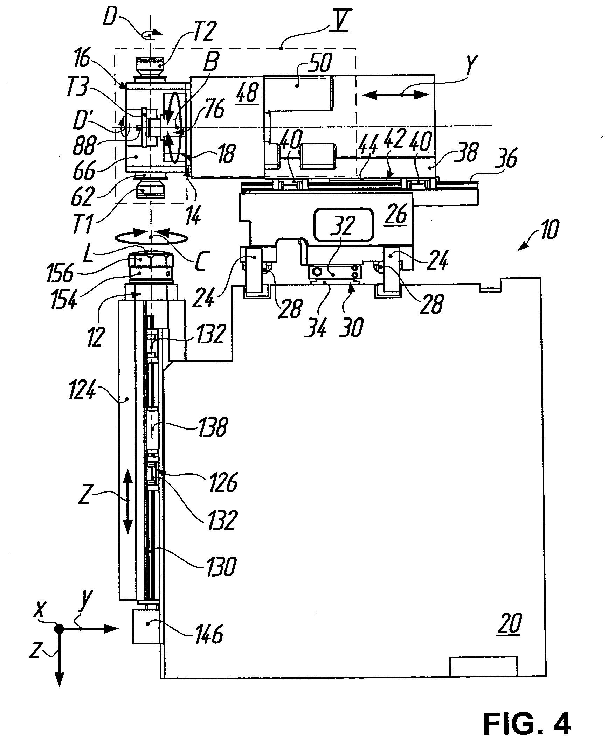

- Fig. 4: eine Seitenansicht der Schleif- und Poliermaschine gemäß Fig. 1 von rechts in Fig. 3, mit den Vereinfachungen der Fig. 1;

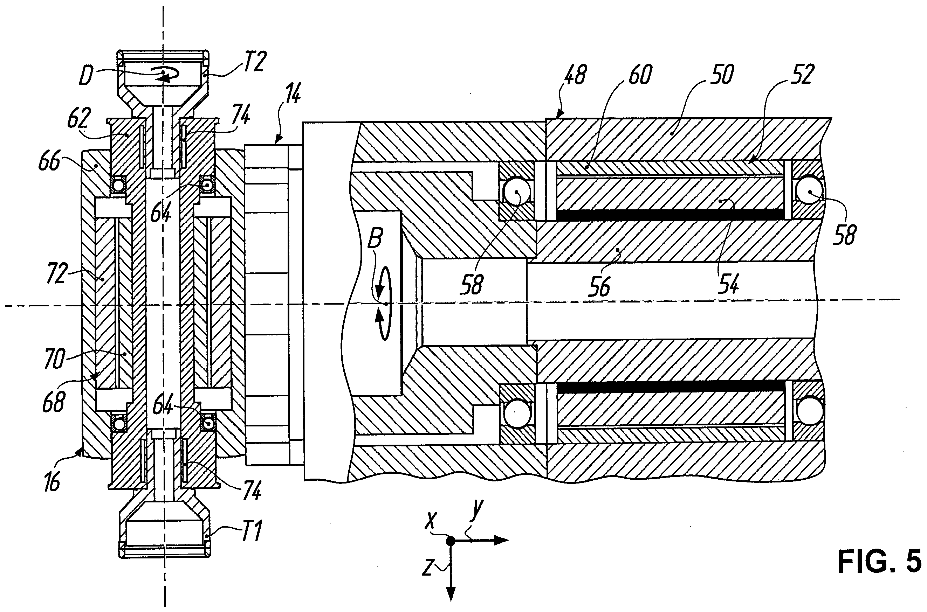

- Fig. 5: eine vergrößerte und teilweise abgebrochene Darstellung des Details V in Fig. 4, mit der entlang der quer zur Schwenkachse B verlaufenden Werkzeug-Drehachse D aufgebrochen gezeigten, ersten Werkzeugspindel der Schleif- und Poliermaschine auf der linken Seite und dem entlang der Schwenkachse B aufgebrochen dargestellten Schwenkkopf der Schleif- und Poliermaschine auf der rechten Seite, wobei die jeweilige Antriebsund Lagersituation stark vereinfacht, d.h. schematisch gezeigt ist;

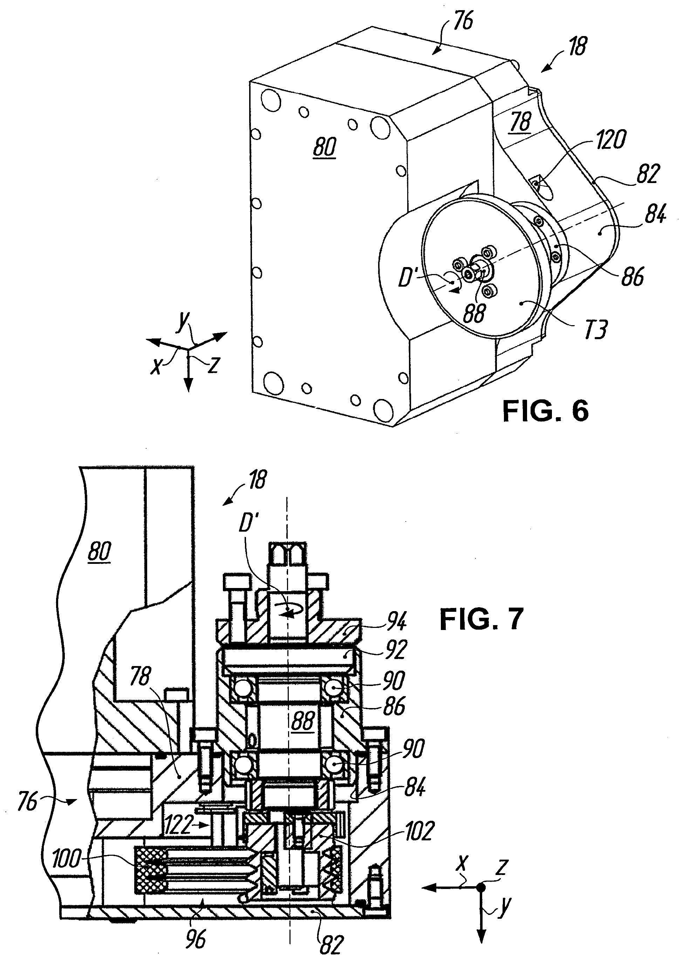

- Fig. 6: eine perspektivische Ansicht der vom Schwenkkopf abgenommenen zweiten Werkzeugspindel der Schleif- und Poliermaschine gemäß Fig. 1 von schräg oben / vorne rechts, mit daran gehaltenem Werkzeug;
- Fig. 7: eine teilweise abgebrochene Unteransicht der zweiten Werkzeugspindel der Schleif- und Poliermaschine gemäß Fig. 1 von unten in Fig. 6, ohne Werkzeug, wobei die zweite Werkzeugspindel mit ihrem Spindelgehäuse entlang der parallel zur Schwenkachse B verlaufenden Werkzeug-Drehachse D' aufgebrochen gezeigt ist;

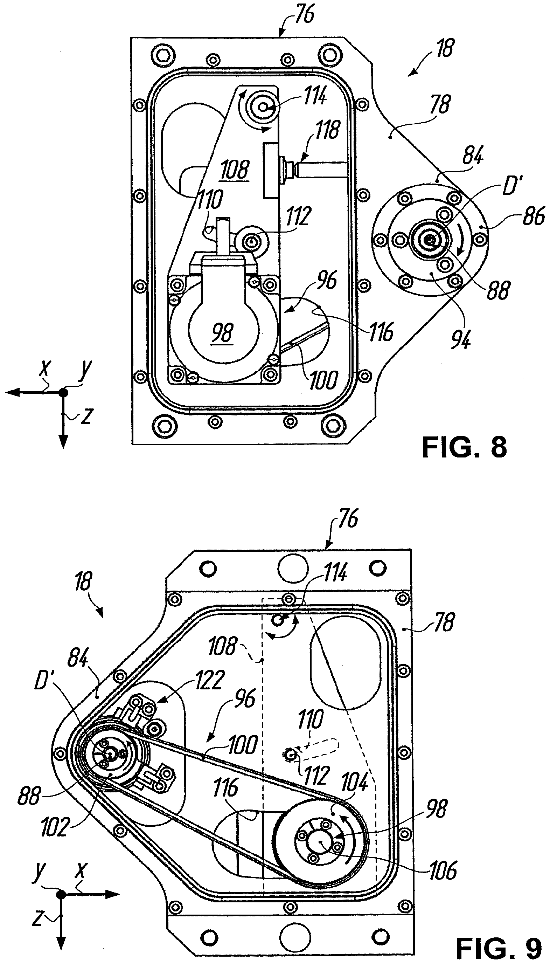

- Fig. 8: eine Frontansicht der zweiten Werkzeugspindel der Schleif- und Poliermaschine gemäß Fig. 1 von vorne in Fig. 6, ohne Werkzeug, wobei eine vordere Abdeckung des Spindelgehäuses abgenommen ist, um den Blick auf einen Spindelmotor der zweiten Werkzeugspindel freizugeben;
- Fig. 9: eine Rückansicht der zweiten Werkzeugspindel der Schleif- und Poliermaschine gemäß Fig. 1 von hinten in Fig. 6, ohne Werkzeug, wobei ein hinterer Deckel des Spindelgehäuses abgenommen ist, um den Blick auf einen Riementrieb der zweiten Werkzeugspindel freizugeben;

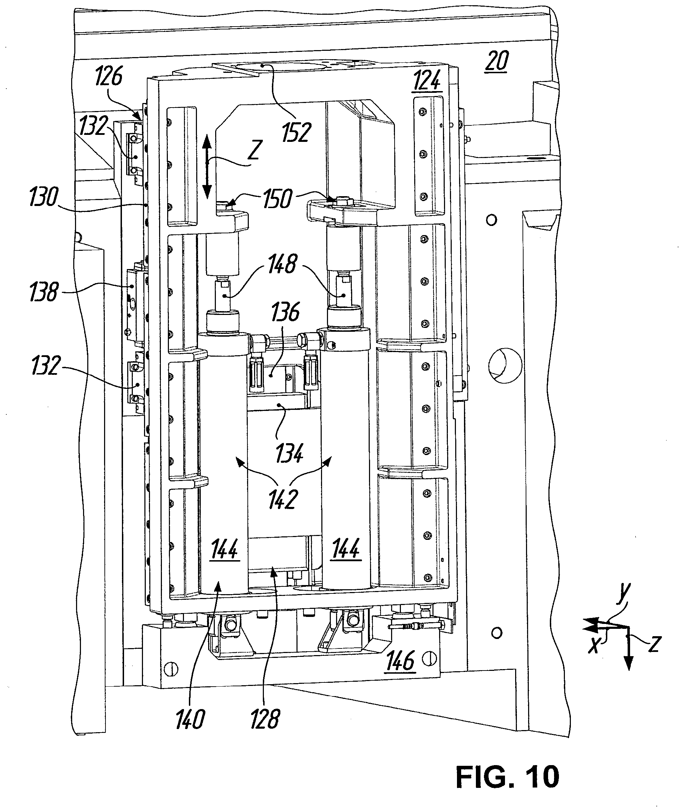

- Fig. 10: eine abgebrochene, perspektivische Ansicht der Schleif- und Poliermaschine gemäß Fig. 1 von schräg oben / vorne links mit Blick auf den Z-Schlitten, von dem die Werkstückspindel abgenommen ist, so dass eine Führungsanordnung für den Z-Schlitten und eine Einrichtung zum Gewichtsausgleich für den Z-Schlitten besser zu erkennen sind;
- Fig. 11: eine schematische Vorderansicht des die Werkzeugspindeln tragenden Schwenkkopfs der Schleif- und Poliermaschine gemäß Fig. 1 vis-a-vis dem oberen Ende der Werkstückspindel, an dem ein zu bearbeitendes Werkstück mittels einer Spannzange gehalten ist, wobei ein radial äußerer Flugkreis des Schwenkkopfs mit gestrichelter Linie eingezeichnet ist;

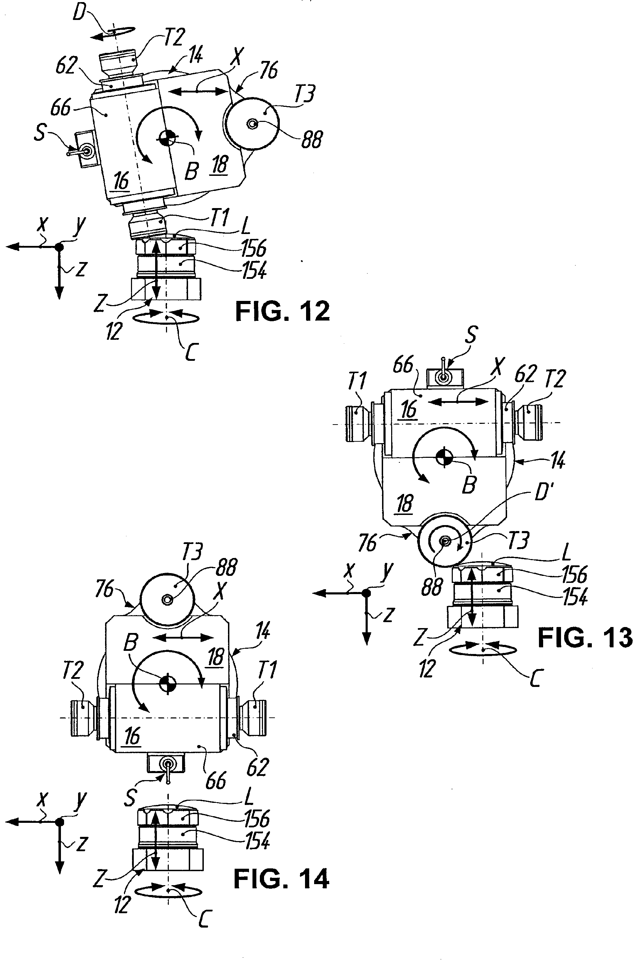

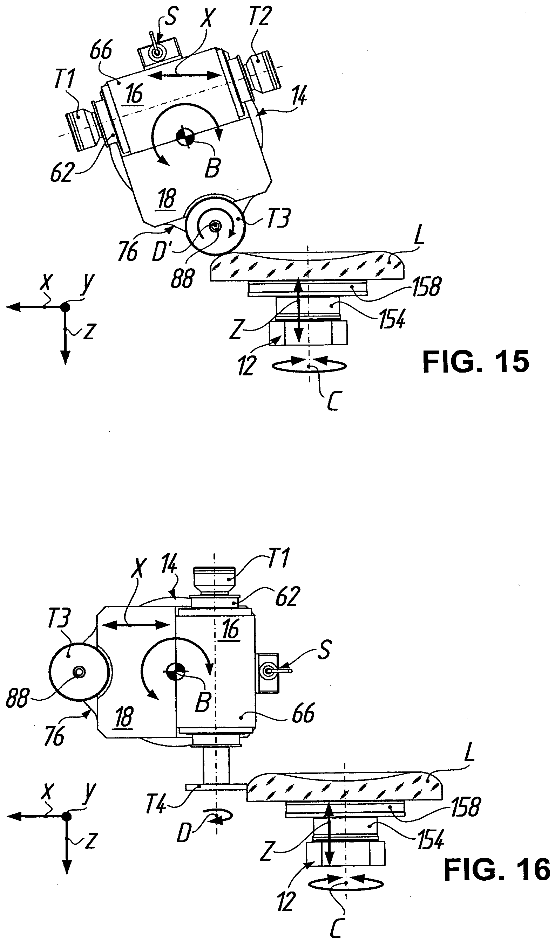

- Fig. 12: bis Fig. 16 der Fig. 11 ähnliche, schematische Vorderansichten von Schwenkkopf und Werkstückspindel der Schleif- und Poliermaschine gemäß Fig. 1, die unterschiedliche Bearbeitungs- bzw. Messvorgänge illustrieren, wobei in den Fig. 15 und 16 ein größeres Werkstück mittels eines Kittadapters am oberen Ende der Werkstückspindel gehalten ist;

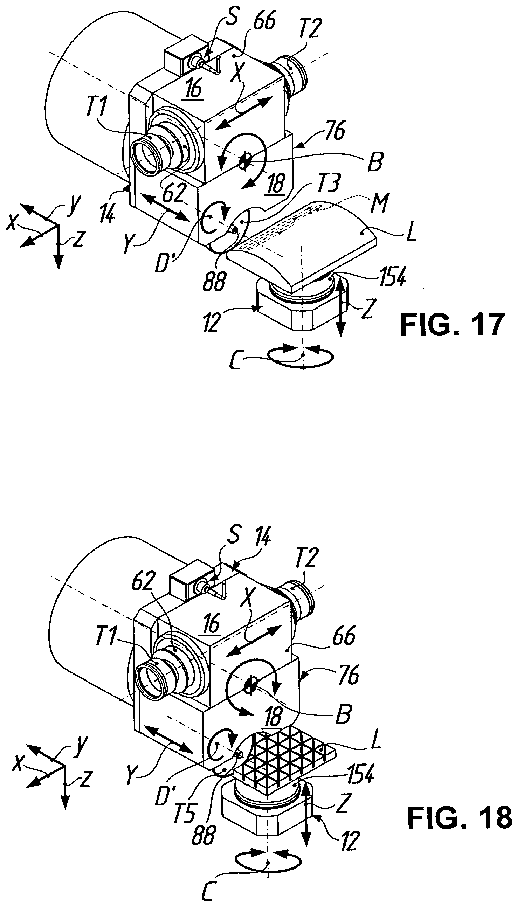

- Fig. 17: und Fig. 18 schematische, perspektivische Ansichten von Schwenkkopf und Werkstückspindel der Schleif- und Poliermaschine gemäß Fig. 1 von schräg oben / vorne links, die weitere Bearbeitungsvorgänge an Werkstücken illustrieren, die mittels eines Kittadapters am oberen Ende der Werkstückspindel gehalten sind;

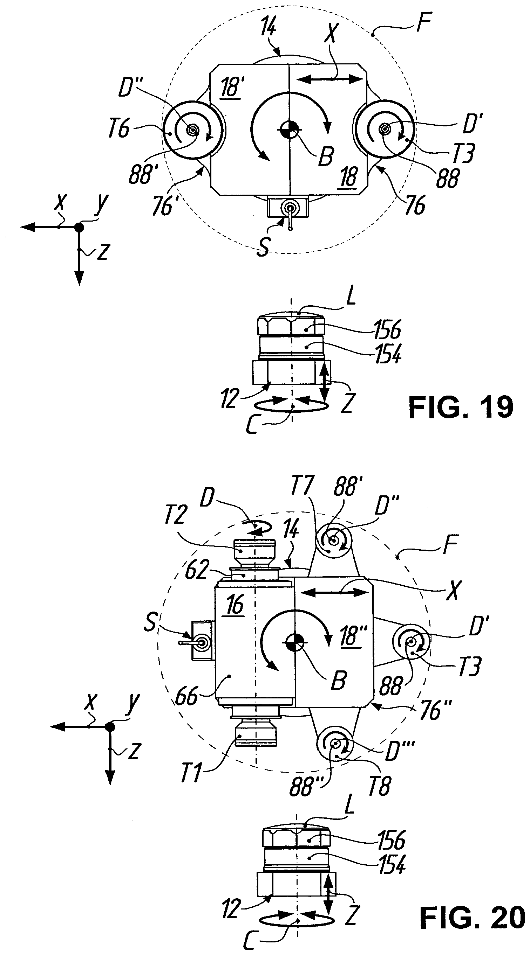

- Fig. 19: eine hinsichtlich der Darstellungsweise der Fig. 11 entsprechende, schematische Vorderansicht eines Schwenkkopfs nach einem zweiten Ausführungsbeispiel, der zwei Werkzeugspindeln nach den Fig. 6 bis 9 mit zur Schwenkachse B parallelen Werkzeug-Drehachsen D', D'' trägt, vis-a-vis dem oberen Ende der Werkstückspindel der Schleif- und Poliermaschine gemäß Fig. 1; und
- Fig. 20: eine hinsichtlich der Darstellungsweise der Fig. 11 entsprechende, schematische Vorderansicht eines Schwenkkopfs nach einem dritten Ausführungsbeispiel, der - analog dem in Fig. 1 gezeigten Schwenkkopf nach dem ersten Ausführungsbeispiel - eine mit ihrer Werkzeug-Drehachse D quer zur Schwenkachse B verlaufende erste Werkzeugspindel trägt, darüber hinaus aber mit drei parallel zur Schwenkachse verlaufenden Werkzeugspindeln versehen ist, vis-a-vis dem oberen Ende der Werkstückspindel der Schleif- und Poliermaschine gemäß Fig. 1.

### DETAILLIERTE BESCHREIBUNG DER AUSFÜHRUNGSBEISPIELE

Die Fig. 1 bis 4 zeigen eine CNC-geregelte Schleif- und Poliermaschine 10 zur Bearbeitung von optisch wirksamen Flächen an Werkstücken L, insbesondere Linsen, in einem rechtwinkligen kartesischen Koordinatensystem, in welchem der Buchstabe x die Breitenrichtung, der Buchstabe y die Längenrichtung und der Buchstabe z die Höhenrichtung der Maschine 10 bezeichnet. Die Maschine 10 umfasst im dargestellten Ausführungsbeispiel allgemein eine Werkstückspindel 12, über die das zu bearbeitende Werkstück L um eine Werkstück-Drehachse C drehend antreibbar ist, und einen der Werkstückspindel 12 gegenüberliegenden Schwenkkopf 14, der um eine Schwenkachse B verschwenkbar ist und hier zwei Werkzeugspindeln 16, 18 trägt, an denen jeweils zumindest ein Feinbearbeitungswerkzeug (Topfscheiben T1, T2; Umfangsschleifscheibe T3) um eine Werkzeug-Drehachse D bzw. D' drehend antreibbar gehalten ist. Wie auch noch näher beschrieben werden wird sind die Werkstückspindel 12 und der Schwenckopf 14 zudem relativ zueinander entlang drei senkrecht zueinander stehenden Linearachsen X, Y, Z verstellbar, von denen eine Linearachse Y parallel zur Schwenkachse B verläuft, während eine andere Linearachse Z sich parallel zur Werkstück-Drehachse C erstreckt. Wesentlich ist, dass wenigstens eine (18) der Werkzeugspindeln mit ihrer Werkzeug-Drehachse D' parallel zur Schwenkachse B verlaufend am Schwenkkopf 14 angebracht ist, wodurch sich eine Vielzahl an Bearbeitungsmöglichkeiten insbesondere für große Werkstücke L ergibt, wie nachfolgend ebenfalls im Detail erläutert werden wird.

Die Maschine 10 besitzt ein Maschinenbett 20, das aus einem monolithischen Block aus Mineralguss ("Polymerbeton") geformt ist. Auf der Oberseite der Maschine 10 sind zwei Führungsschienen 22, die sich in der horizontalen Breitenrichtung x parallel zueinander erstrecken, am Maschinenbett 20 befestigt. Die beiden Führungsschienen 22 sind durch Endanschläge 24 begrenzt. An den Führungsschienen 22 ist ein X-Schlitten 26 über Führungswagen 28 verschiebbar geführt, der durch einen Linearmotor 30 in beiden Richtungen der Linearachse X CNC-lagegeregelt verstellbar ist. Das bestromte Primärteil 32 des Linearmotors 30 ist unten am X-Schlitten 26 befestigt, während das passive Sekundärteil 34 zwischen den Führungsschienen 22 am Maschinenbett 20 angeordnet ist.

Auf dem X-Schlitten 26 sind zwei Führungsschienen 36 befestigt, die sich in der horizontalen Längenrichtung y parallel zueinander erstrecken, wie am besten in Fig. 2 zu sehen ist. An den Führungsschienen 36 ist ein Y-Schlitten 38 über Führungswagen 40 verschiebbar geführt, der durch einen weiteren Linearmotor 42 in beiden Richtungen der Linearachse Y CNC-lagegeregelt verstellbar ist. Der weitere Linearmotor 42 hat ein bestromtes Primärteil 44, das unten am Y-Schlitten 38 angebracht ist und mit einem passiven Sekundärteil 46 zusammenwirkt, welches zwischen den Führungsschienen 36 am X-Schlitten 26 montiert ist.

Der Y-Schlitten 38 trägt einen Schwenkantrieb 48 für den Schwenkkopf 14, mittels dessen der Schwenkkopf 14 CNC-drehwinkelgeregelt, also mit definierter Winkellage um die Schwenkachse B verschwenkbar ist. Es ist ersichtlich, dass die Schlitten 26, 38 somit eine X-Y-Kreuztisch-Anordnung bilden, mittels der der Schwenkkopf 14 in einer horizontalen Ebene verstellbar ist, in der die Schwenkachse B liegt. Am Schwenkkopf 14 sind die Werkzeugspindeln 16, 18 in einer Nebeneinanderanordnung angebracht, so dass die Werkzeugspindel 16 mit ihrer Werkzeug-Drehachse D quer zur Schwenkachse B verläuft, während sich die Werkzeug-Drehachse D' der Werkzeugspindel 18 längs der Schwenkachse B erstreckt. Die Anordnung ist hierbei so getroffen, dass ein Massenschwerpunkt des die Werkzeugspindeln 16, 18 tragenden Schwenkkopfs 14 auf oder zumindest nahe der Schwenkachse B liegt.

Weitere Details zum Schwenkantrieb 48 sind der Fig. 5 zu entnehmen. Der Schwenkantrieb 48 umfasst einen gleichachsig mit der Schwenkachse B in einem mehrteiligen Antriebsgehäuse 50 angeordneten Torque-Motor 52, dessen Rotor 54 an einer Schwenkwelle 56 angebracht ist, die ihrerseits fest mit dem Schwenckopf 14 verbunden ist (beispielsweise mittels hier nicht dargestellter Schrauben). Der Verbund aus Schwenkkopf 14 und Schwenkwelle 56 ist über zwei voneinander beabstandete Lager 58 im Antriebsgehäuse 50 drehbar und axial unverschiebbar gelagert. Der konzentrisch zum Rotor 54 des Torque-Motors 52 angeordnete Stator 60 ist im Antriebsgehäuse 50 drehfest befestigt.

Der Fig. 5 können auch weitere Details der Werkzeugspindel 16 entnommen werden. Demgemäß ist die Werkzeugspindel 16 an beiden Enden zur gleichachsigen Aufnahme jeweils eines Bearbeitungswerkzeugs (Topfscheiben T1, T2) ausgebildet. Genauer gesagt weist die Werkzeugspindel 16 eine durchgehende, als Hohlwelle geformte Spindelwelle 62 auf, die über zwei voneinander beabstandete Lager 64 drehbar und axial unverschiebbar in einem Spindelgehäuse 66 gelagert ist. In dem Spindelgehäuse 66 ist ferner zum drehzahlgesteuerten Antrieb der Spindelwelle 62 um die Werkzeug-Drehachse D ein Torque-Motor 68 aufgenommen, dessen Rotor 70 mit der Spindelwelle 62 fest verbunden ist, während der den Rotor 70 konzentrisch umgebende Stator 72 des Torque-Motors 68 drehfest im Spindelgehäuse 66 befestigt ist. An beiden Enden der Spindelwelle 62 sind Hydrodehnfutter 74 vorgesehen, um die Schäfte der in die hohle Spindelwelle 62 eingesetzten Werkzeuge T1 bzw. T2 einzuspannen.

Einzelheiten zu der neben der vorbeschriebenen ersten Werkzeugspindel 16 am Schwenkkopf 14 angebrachten zweiten Werkzeugspindel 18 sind den Fig. 6 bis 9 zu entnehmen. Demgemäß weist die Werkzeugspindel 18 ein mehrteiliges Spindelgehäuse 76 auf, umfassend eine mittlere Basis 78 sowie eine vordere Abdeckung 80 und einen hinteren Deckel 82, die an der Basis 78 mittels Schraubverbindungen befestigt sind, wie in Fig. 7 angedeutet ist. Die Basis 78 bildet ein seitlich vorstehendes Lagerauge 84 aus, an dem ein Lagerflansch 86 angeflanscht ist. Im Lagerflansch 86 ist gemäß Fig. 7 eine Spindelwelle 88 über zwei voneinander beabstandete Schrägkugellager 90 drehbar und axial unverschiebbar gelagert. An ihrem über den Lagerflansch 86 nach außen vorstehenden Ende ist die Spindelwelle 88 mit einem Spanndom 92 versehen, an dem ein Werkzeugadapter 94 drehfest befestigt ist. An dem Werkzeugadapter 94 ist in an sich bekannter Weise die in Fig. 6 gezeigte Umfangsschleifscheibe T3 als Bearbeitungswerkzeug bezüglich der Spindelwelle 88 zentriert mittels Schrauben befestigbar. Den jeweiligen Bearbeitungserfordernissen entsprechend kann Letztere eine zylindrische Außenumfangsfläche oder aber eine Außenumfangsfläche in der Form einer symmetrischen Kugelzone aufweisen (kugelringförmige Schleifscheibe).

Wie insbesondere den Fig. 7 und 9 zu entnehmen ist, ist zum Drehantrieb der Werkzeugspindel 18 mit der parallel zur Schwenkachse B verlaufenden Werkzeug-Drehachse D' ein Riementrieb 96 vorgesehen, mit einem parallel zur Spindelwelle 88 angeordneten Spindelmotor 98, der über einen Riemen 100 mit der Spindelwelle 88 antriebsverbunden ist. Genauer gesagt ist an dem über den Lagerflansch 86 in die Basis 78 des Spindelgehäuses 76 vorstehenden Ende der Spindelwelle 88 eine Riemenscheibe 102 befestigt, auf der der Riemen 100 läuft, ebenso wie auf einer Riemenscheibe 104, die an einer in die Basis 78 des Spindelgehäuses 76 vorstehenden Motorwelle 106 des Spindelmotors 98 angebracht ist (siehe Fig. 9). Bei dem Riemen 100 handelt es sich im dargestellten Ausführungsbeispiel um einen Poly-V-Riemen, wie er etwa unter der Bezeichnung "Polyflex^{®} JB^{™} Keilriemen" von der Walther Flender Gruppe, Düsseldorf, Deutschland im Handel erhältlich ist.

Gemäß den Fig. 8 und 9 ist zur Spannung des Riemens 100 der Spindelmotor 98 relativ zur Spindelwelle 88 verschwenkbar gelagert. Hierfür ist der Spindelmotor 98 unter der Abdeckung 80 an einem plattenförmigen Spannflansch 108 angeflanscht, der auf der vom Deckel 82 abgewandten Seite der Basis 78 angeordnet ist. Der Spannflansch 108 ist über ein gekrümmtes Langloch 110 und eine an der Basis 78 befestigte Passschraube 112 geführt bezüglich der Basis 78 um eine Lagerstelle 114 an der Basis 78 verschwenkbar gelagert, wie in den Fig. 8 und 9 mit einem Doppelpfeil angedeutet ist. Hierbei durchgreift die Motorwelle 106 eine Aussparung 116 in der Basis 78, so dass die Riemenscheibe 104 und der Spannflansch 108 auf gegenüberliegenden Seiten der Basis 78 angeordnet sind. Zwischen der Motorwelle 106 und der Lagerstelle 114 greift gemäß Fig. 8 ein Gelenkstück 118 seitlich am Spannflansch 108 an. Das Gelenkstück 118 ist über eine in Fig. 6 bei 120 angedeutete, am Spindelgehäuse 76 von außen zugängliche Handhabe und eine Gewindeverbindung (nicht gezeigt) zur Basis 78 entlang seiner Längsachse relativ zur Basis 78 axial verlagerbar. Es ist ersichtlich, dass durch eine axiale Verstellung des Gelenkstücks 118 der Spannflansch 108 um die Lagerstelle 114 verschwenkbar ist, wodurch der Riemen 100 gespannt werden kann.

Bei 122 ist in Fig. 9 schließlich noch eine Sensoranordnung angedeutet, die zur Drehzahlsensierung der Spindelwelle 88 an der Basis 78 befestigt ist.

Wie weiterhin den Fig. 1 bis 4 zu entnehmen ist, ist die Werkstückspindel 12 zur Verstellung entlang der Linearachse Z an einem Z-Schlitten 124 angebracht, der mittels einer Führungsanordnung 126 am Maschinenbett 20 geführt und mittels eines weiteren Linearmotors 128 relativ zum Maschinenbett 20 bewegbar ist. Um die diesbezüglichen Details besser erkennen zu können, wurde die Werkstückspindel 12 in der Darstellung gemäß der Fig. 10 weggelassen.

Gemäß insbesondere den Fig. 1 und 10 umfasst die Führungsanordnung 126 zwei sich in der vertikalen Höhenrichtung z parallel zueinander erstreckende Führungsschienen 130, die an der dem Maschinenbett 20 zugewandten Seite des Z-Schlittens 124 angebracht sind. An der Vorderseite der Maschine 10 sind insgesamt vier Führungswagen 132 am Maschinenbett 20 befestigt, in denen die Führungsschienen 130 laufen. Der Z-Schlitten 124 ist in beiden Richtungen der Linearachse Z CNC-lagegeregelt verstellbar, wozu der Linearmotor 128 vorgesehen ist. Der Linearmotor 128 hat ein bestromtes Primärteil 134, das am Z-Schlitten 124 zwischen den Führungsschienen 130 angebracht ist und mit einem passiven Sekundärteil 136 zusammenwirkt, welches an der Vorderseite des Maschinenbetts 20 montiert ist. Die Verwendung des Linearmotors 128 für den Z-Schlitten 124 ermöglicht vorteilhaft die Durchführung eines kraftgeregelten Schleifprozesses, wie er in der Druckschrift DE 10 2012 010 004 A1 beschrieben ist, auf die an dieser Stelle bezüglich der Verfahrensdetails ausdrücklich verwiesen sei.

Wie ferner aus den Fig. 1, 3, 4 und 10 ersichtlich ist, umfasst die Führungsanordnung 126 für den Z-Schlitten 124 Klemmelemente 138, die dazu dienen, den Z-Schlitten 124 gegen die Wirkung der Schwerkraft relativ zum Maschinenbett 20 festzulegen. Hierbei ist jeder Führungsschiene 130 ein Klemmelement 138 zugeordnet, welches jeweils zwischen den entsprechenden Führungswagen 132 am Maschinenbett 20 befestigt ist. Die Klemmelemente 138 besitzen Klemm- und Bremsbacken (nicht gezeigt), die eine zur Geometrie der Führungsschienen 130 komplementäre Geometrie aufweisen und über einen Federenergiespeicher (nicht dargestellt) vorgespannt sind, so dass sie im Ruhezustand gegen die Führungsschiene 130 gepresst werden und mit dieser einen Reibschluss herstellen. Jedes Klemmelement 138 besitzt darüber hinaus eine pneumatische Kolben-Zylinder-Anordnung (nicht gezeigt), die bei pneumatischer Druckbeaufschlagung gegen den Federenergiespeicher wirkt, um die Klemm- und Bremsbacken zu lösen, so dass die jeweilige Führungsschiene 130 im zugeordneten Klemmelement 138 verschiebbar ist. Derartige Klemmelemente 138 sind z.B. von der Zimmer Group, Rheinau, Deutschland unter der Serienbezeichnung "UBPS" im Handel erhältlich.

Darüber hinaus ist die Maschine 10 mit einer Einrichtung 140 zum Gewichtsausgleich für den die Werkstückspindel 12 tragenden Z-Schlitten 124 versehen. Die Einrichtung 140 zum Gewichtsausgleich weist im dargestellten Ausführungsbeispiel zwei im Z-Schlitten 124 parallel angeordnete Pneumatikzylinder 142 auf, die betätigungswirksam zwischen dem Z-Schlitten 124 und dem Maschinenbett 20 angeordnet und pneumatisch beaufschlagbar sind, um das Gewicht des die Werkstückspindel 12 tragenden Z-Schlittens 124 gegenzuhalten. Genauer gesagt sind die Pneumatikzylinder 142 gemäß Fig. 10 mit ihren Zylindergehäusen 144 unterhalb des Z-Schlittens 124 an einer Quertraverse 146 angelenkt, die ihrerseits fest am Maschinenbett 20 montiert ist. Oberhalb der Zylindergehäuse 144 sind aus diesen vorstehende Kolbenstangen 148 bei 150 am Z-Schlitten 124 befestigt, wie am besten in den Fig. 3 und 10 zu erkennen ist. Es ist ersichtlich, dass die Pneumatikzylinder 142 die Gewichtskraft des Z-Schlittens 124 über die Kolbenstangen 148 und die Zylindergehäuse 144 an der mit dem Maschinenbett 20 fest verbundenen Quertraverse 146 abzustützen vermögen.

In einer zugeordneten Aussparung 152 (siehe Fig. 10) des Z-Schlittens 124 ist schließlich die Werkstückspindel 12 aufgenommen und auf geeignete Weise befestigt, so dass sie über den Z-Schlitten 124 nach oben in Richtung des Schwenkkopfs 14 vorsteht. Im dargestellten Ausführungsbeispiel trägt die Werkstückspindel 12 an ihrem oberen Ende ein Kombifutter 154, welches vermittels der Werkstückspindel 12 um die Werkstück-Drehachse C CNC-drehwinkelgeregelt rotieren oder in definierte Winkelpositionen gedreht werden kann. Das Kombifutter 154 besitzt einen Hydrodehn-Spannmechanismus (nicht dargestellt), mittels dessen für zylindrische Werkstücke L eine Spannzange 156 gehalten werden kann, wie insbesondere in den Fig. 11 bis 14 gezeigt, oder ein Kittadapter 158, wenn nicht zylindrische Werkstücke (z.B. Asphären, Zylinderlinsen oder Prismen) zu halten sind, wie in den Fig. 15 bis 18 dargestellt.

Gemäß Fig. 11 weist jedes am Schwenkkopf 14 vorgesehene Bearbeitungswerkzeug T1, T2, T3 einen Eingriffsbereich E1, E2, E3 auf, der mit dem Werkstück L in Bearbeitungseingriff gebracht werden kann. Dabei sind die Werkzeugspindeln 16, 18 so am Schwenkkopf 14 angeordnet, dass der Eingriffsbereich wenigstens eines der daran gehaltenen Bearbeitungswerkzeuge um die Schwenkachse B einen radial äußeren Flugkreis F des Schwenckopfs 14 definiert. Mit anderen Worten gesagt steht über diesen Flugkreis F des Schwenkkopfs 14 kein Teil des Schwenkkopfs 14 radial vor.

Im hier dargestellten Ausführungsbeispiel besitzen sogar die Eingriffsbereiche E1, E2, E3 aller Bearbeitungswerkzeuge T1, T2, T3 im Wesentlichen den gleichen radialen Abstand zur Schwenkachse B. Außerdem sind die Eingriffsbereiche E1, E2, E3 der Bearbeitungswerkzeuge T1, T2, T3 bezüglich der Schwenkachse B im Wesentlichen gleichmäßig voneinander winkelbeabstandet, nämlich um ca. 120°.

Die Fig. 11 zeigt auch, dass der Schwenkkopf 14 seitlich mit einem Funktionselement zur Erfassung der Werkstückgeometrie versehen sein kann, bei dem es sich hier um einen Messtaster S handelt. Auch der Messtaster S ragt nicht über den Flugkreis F der Bearbeitungswerkzeuge T1, T2, T3 vor. Anstelle des Messtasters S könnte als Funktionselement natürlich auch ein Ringsphärometer gemäß DIN 58724 (nicht gezeigt) seitlich am Schwenkkopf 14 angebracht sein.

Die Fig. 12 bis 16 illustrieren auf der Fig. 11 ähnliche Art und Weise unterschiedliche Bearbeitungs- bzw. Messvorgänge, die (u.a.) mit der Maschine 10 durchgeführt werden können, wobei der Schwenkkopf 14 mit den Werkzeugspindeln 16, 18 und die Werkstückspindel 12 jeweils in einer schematischen Vorderansicht dargestellt sind.

Die Fig. 12 zeigt wie zunächst die Konvexfläche einer Linse L mittels der unten an der linken Werkzeugspindel 16 angebrachten Topfscheibe T1 bearbeitet wird. Die Bearbeitung entspricht dem bekannten Flachschleifprinzip. Während die in der Spannzange 156 gehaltene Linse L von der Werkstückspindel 12 um die Werkstück-Drehachse C drehend angetrieben wird, treibt die Werkzeugspindel 16 die Topfscheibe T1 drehend um die Werkzeug-Drehachse D an. Der Schwenkkopf 14 wird um die Schwenkachse B in eine vorbestimmte Winkelstellung verschwenkt, die während dieses Bearbeitungsschritts nicht mehr verändert wird. In der Folge erfolgen Zustellung und Vorschub durch koordiniertes Verfahren der Werkstückspindel 12 entlang der Linearachse Z (Zustellung) und des Schwenkkopfs 14 entlang der Linearachse X (Vorschub).

Ist dieser Bearbeitungsschritt, der z.B. einer Vorbearbeitung der Linse L dienen kann, beendet, kann etwa zum Zwecke einer Feinbearbeitung der Linse L der Schwenkkopf 14 soweit verschwenkt werden, dass die am anderen Ende der Werkzeugspindel 16 gehaltene Topfscheibe T2 der Werkstückspindel 12 gegenüberliegt (nicht gezeigt), worauf in analoger Weise die rotierende Linse L mittels der ebenfalls rotierenden Topfscheibe T2 bearbeitet wird (fixer Schwenkwinkel um die Schwenkachse B, Zustellung entlang der Linearachse Z und Vorschub entlang der Linearachse X).

Hieran kann sich den jeweiligen Bearbeitungserfordernissen entsprechend noch ein Feinstbearbeitungsschritt anschließen, der mit der Umfangsschleifscheibe T3 durchgeführt wird, die an der parallel zur Schwenkachse B ausgerichteten Werkzeugspindel 18 gehalten ist. Dies ist in Fig. 13 dargestellt. Mittels des Schwenkkopfs 14 wird hierfür die Werkzeugspindel 18 um die Schwenkachse B in eine Position verschwenkt, in der die Umfangsschleifscheibe T3 der Werkstückspindel 12 gegenüberliegt. Werkzeug T3 und Werkstück L werden sodann drehend angetrieben und durch koordiniertes Verfahren in der Schwenkachse B, der Linearachse X und der Linearachse Z in einen definierten Bearbeitungseingriff gebracht. Dieser Bearbeitungsschritt ist insbesondere für nicht-rotationssymmetrische Flächen bzw. Freiformflächen von großem Interesse.

Es ist ersichtlich, dass für die vorbeschriebene Bearbeitungsabfolge kein Werkzeugwechsel und auch keine Werkzeug(neu)justage notwendig sind, da die erforderlichen Werkzeuge T1, T2 und T3 schon sämtlich am Schwenkkopf 14 vorhanden sind.

In Fig. 14 ist dargestellt, wie der seitlich am Schwenkkopf 14 angebrachte Messtaster S verwendet wird, um z.B. die Mittendicke der Linse L zu messen: Zunächst findet ein Ausfluchten des Messtasters S mit der Werkstück-Drehachse C unter Zuhilfenahme der Bewegungsachsen B, X und ggf. Y statt, bevor das eigentliche Antasten der Linse L unter Einsatz der Bewegungsachse Z erfolgt. Ebenso kann der Messtaster S in vorbestimmter Winkellage um die Schwenkachse B unter geeignetem Einsatz der Bewegungsachsen X, Z, C oder Y dazu verwendet werden, die gesamte Geometrie der Linse L zu erfassen. Die Messwerte können dann direkt in die CNC-Steuerung eingelesen werden, um z.B. automatische Korrekturen und Verschleißkompensationen durchzuführen.

Die Fig. 15 illustriert die Bearbeitung eines großen asphärischen Werkstücks L, das auf den Kittadapter 158 aufgekittet ist, der seinerseits am Kombifutter 154 der Werkstückspindel 12 gehalten ist. Diese Bearbeitung kann nach dem Drehumfangs-Querschleifprinzip oder -längsschleifprinzip erfolgen, wobei die Werkstückfläche entweder spiralförmig (unter Einsatz der Werkstück-Drehachse C) oder mäanderförmig (unter Einsatz der Linearachse Y) abgearbeitet werden kann. Für diese Art der Bearbeitung sind die langen Verfahrwege des Schwenkkopfs 14 entlang der Linearachse X und die großen Schwenkwinkel des Schwenkkopfs 14 um die Schwenkachse B von besonderem Vorteil.

Die Fig. 16 zeigt die Randbearbeitung des Werkstücks L von Fig. 15 mittels einer an einem Ende der Werkzeugspindel 16 gehaltenen Umfangsschleifscheibe T4. Diese Bearbeitung kann unter einem fixen Schwenkwinkel des Schwenkkopfs 14 um die Schwenkachse B (0°, wie gezeigt) und einem geeigneten Verfahren in den Bewegungsachsen X und Z erfolgen (Zylinder-Zentrieren). Zur Anbringung einer Schlüsselfläche am Außenumfang des Werkstücks L, d.h. zur Erzeugung einer Abflachung an einer (oder mehreren) Seite(n) des Werkstücks L kann auch ein geeignet koordiniertes Verfahren in den Bewegungsachsen X, Z und C (große Werkstücke) oder X, Z und Y (kleine Werkstücke) erfolgen.

Im Bearbeitungsbeispiel der Fig. 17 wird eine Zylinderlinse L mittels einer an der Werkzeugspindel 18 gehaltenen Umfangsschleifscheibe T3 bearbeitet. Diese Bearbeitung erfolgt bei fixem Schwenkwinkel des Schwenkkopfs 14 um die Schwenkachse B und bezüglich der Werkstück-Drehachse C fest positioniertem Werkstück L. Die Zustellung erfolgt in der Bewegungsachse Z, während durch geeignet koordiniertes Verfahren in den Bewegungsachsen X und Y die zu bearbeitende Werkstückoberfläche rasterartig ("kämmend") oder mäanderartig vom Werkzeug T3 abgefahren wird. In Fig. 17 ist mit M eine mäanderförmige Bearbeitungsbahn bezeichnet.

Die Fig. 18 illustriert das Sägen bzw. Trennen eines Werkstücks L mittels einer sehr schmalen Trennschleifscheibe T5, die an der Werkzeugspindel 18 gehalten ist. Der Vorschub erfolgt hier bei fixen Schwenkwinkeln in den Bewegungsachsen B und C mittels der Linearachse X, die Zustellung über die Linearachse Z. Auch hier kann durch ein geeignetes Verfahren entlang der Linearachse Y zwischen den einzelnen Schnitten rasterartig oder mäanderartig gearbeitet werden. So können beispielsweise Prismen hergestellt werden.

Die Fig. 19 und 20 zeigen weitere Ausführungsbeispiele des Schwenkkopfs 14. Bei dem zweiten Ausführungsbeispiel des Schwenkkopfs 14 gemäß Fig. 19 sind zwei Werkzeugspindeln 18, 18' nach den Fig. 6 bis 9 mit zur Schwenkachse B parallelen Werkzeug-Drehachsen D', D'' in spiegelsymmetrischer Anordnung am Schwenkkopf 14 montiert. So kann der Schwenkkopf 14 auf bezüglich der Schwenkachse B diametral gegenüberliegenden Seiten mit z.B. jeweils einer Umfangsschleifscheibe T3, T6 versehen sein. Auf diese Weise kann ebenfalls zweistufig mit z.B. zwei verschiedenen Werkzeugkörnungen gearbeitet werden, so dass ohne Werkzeugwechsel eine Vor- und eine Feinbearbeitung erfolgen kann.

Fig. 20 zeigt schließlich ein drittes Ausführungsbeispiel des Schwenkkopfs 14 und generell die Möglichkeit, den jeweiligen Bearbeitungserfordernissen entsprechend mehrere Schleif- bzw. Polierwerkzeuge T1, T2, T3, T7 und T8 in der vorgeschlagenen Anordnung zu einem Teil quer zur Schwenkachse B drehend (Werkzeug-Drehachse D) und zum anderen Teil parallel zur Schwenkachse B drehend (Werkzeug-Drehachsen D', D'', D‴) sowie im Wesentlichen auf einem Flugkreis F liegend in der Maschine 10 zu verwenden.

Eine Maschine zur Bearbeitung von optisch wirksamen Flächen an Werkstücken weist wenigstens eine Werkstückspindel auf, über die ein zu bearbeitendes Werkstück um eine Werkstück-Drehachse C drehend antreibbar ist, und hat ferner einen der Werkstückspindel gegenüberliegenden Schwenkkopf, der um eine Schwenkachse B verschwenkbar ist und mindestens zwei Werkzeugspindeln trägt, an denen jeweils zumindest ein Bearbeitungswerkzeug um eine Werkzeug-Drehachse D, D' drehend antreibbar gehalten ist. Zudem sind die Werkstückspindel und der Schwenkkopf relativ zueinander entlang drei senkrecht zueinander stehenden Linearachsen X, Y, Z verstellbar, von denen eine Linearachse Y parallel zur Schwenkachse B verläuft, und wobei sich die Werkstück-Drehachse C parallel zu einer anderen Linearachse Z der Linearachsen X, Y, Z erstreckt. Wenigstens eine Werkzeugspindel ist mit ihrer Werkzeug-Drehachse D' parallel zur Schwenkachse B verlaufend am Schwenkkopf angebracht, was eine Vielzahl unterschiedlicher Bearbeitungsstrategien erlaubt, insbesondere auch die Bearbeitung von großen Werkstücken und Werkstücken mit großen Topografieänderungen bei hoher Genauigkeit.

### BEZUGSZEICHENLISTE

- 10: Maschine
- 12: Werkstückspindel
- 14: Schwenkkopf
- 16: Werkzeugspindel
- 18, 18', 18'': Werkzeugspindel
- 20: Maschinenbett
- 22: Führungsschiene
- 24: Endanschlag
- 26: X-Schlitten
- 28: Führungswagen
- 30: Linearmotor
- 32: Primärteil
- 34: Sekundärteil
- 36: Führungsschiene
- 38: Y-Schlitten
- 40: Führungswagen
- 42: Linearmotor
- 44: Primärteil
- 46: Sekundärteil
- 48: Schwenkantrieb
- 50: Antriebsgehäuse
- 52: Torque-Motor
- 54: Rotor
- 56: Schwenkwelle
- 58: Lager
- 60: Stator
- 62: Spindelwelle
- 64: Lager
- 66: Spindelgehäuse
- 68: Torque-Motor
- 70: Rotor
- 72: Stator
- 74: Hydrodehnfutter
- 76, 76', 76'': Spindelgehäuse
- 78: Basis
- 80: Abdeckung
- 82: Deckel
- 84: Lagerauge
- 86: Lagerflansch
- 88, 88', 88'': Spindelwelle
- 90: Schrägkugellager
- 92: Spanndom
- 94: Werkzeugadapter
- 96: Riementrieb
- 98: Spindelmotor
- 100: Riemen
- 102: Riemenscheibe
- 104: Riemenscheibe
- 106: Motorwelle
- 108: Spannflansch
- 110: gekrümmtes Langloch
- 112: Passschraube
- 114: Lagerstelle
- 116: Aussparung
- 118: Gelenkstück
- 120: Handhabe
- 122: Sensoranordnung
- 124: Z-Schlitten
- 126: Führungsanordnung
- 128: Linearmotor
- 130: Führungsschiene
- 132: Führungswagen
- 134: Primärteil
- 136: Sekundärteil
- 138: Klemmelement
- 140: Einrichtung zum Gewichtsausgleich
- 142: Pneumatikzylinder
- 144: Zylindergehäuse
- 146: Quertraverse
- 148: Kolbenstange
- 150: Befestigung
- 152: Aussparung
- 154: Kombifutter
- 156: Spannzange
- 158: Kittadapter

- B: Schwenkachse Schwenkkopf (drehwinkelgeregelt)
- C: Werkstück-Drehachse Werkstückspindel (drehwinkelgeregelt)
- D: Werkzeug-Drehachse Werkzeugspindel (drehzahlgesteuert)
- D': Werkzeug-Drehachse Werkzeugspindel (drehzahlgesteuert)
- Dʺ: Werkzeug-Drehachse Werkzeugspindel (drehzahlgesteuert)
- D‴: Werkzeug-Drehachse Werkzeugspindel (drehzahlgesteuert)
- E1: Eingriffsbereich der Topfscheibe
- E2: Eingriffsbereich der Topfscheibe
- E3: Eingriffsbereich der Umfangsschleifscheibe
- F: Flugkreis
- L: Linse / Werkstück
- M: mäanderförmige Bearbeitungsbahn
- S: Messtaster
- T1: Topfscheibe
- T2: Topfscheibe
- T3: Umfangsschleifscheibe
- T4: Umfangsschleifscheibe
- T5: Trennschleifscheibe
- T6: Umfangsschleifscheibe
- T7: Umfangsschleifscheibe
- T8: Umfangsschleifscheibe
- x: Breitenrichtung
- X: Linearachse X-Schlitten (lagegeregelt)
- y: Längsrichtung
- Y: Linearachse Y-Schlitten (lagegeregelt)
- z: Höhenrichtung
- Z: Linearachse Z-Schlitten (lagegeregelt)

## Patentansprüche

1. Maschine (10) zur Bearbeitung von optisch wirksamen Flächen an Werkstücken, mit wenigstens einer Werkstückspindel (12), über die ein zu bearbeitendes Werkstück (L) um eine Werkstück-Drehachse (C) drehend antreibbar ist, und einem der Werkstückspindel (12) gegenüberliegenden Schwenkkopf (14), der um eine Schwenkachse (B) verschwenkbar ist und mindestens zwei Werkzeugspindeln (16, 18) trägt, an denen jeweils zumindest ein Bearbeitungswerkzeug (T1, T2, T3) um eine Werkzeug-Drehachse (D, D') drehend antreibbar gehalten ist, wobei die Werkstückspindel (12) und der Schwenkkopf (14) zudem relativ zueinander entlang drei senkrecht zueinander stehenden Linearachsen (X, Y, Z) verstellbar sind, von denen eine Linearachse (Y) parallel zur Schwenkachse (B) verläuft, und wobei sich die Werkstück-Drehachse (C) parallel zu einer anderen Linearachse (Z) der Linearachsen (X, Y, Z) erstreckt, **dadurch gekennzeichnet, dass** wenigstens eine Werkzeugspindel (18) der mindestens zwei Werkzeugspindeln (16, 18) mit ihrer Werkzeug-Drehachse (D') parallel zur Schwenkachse (B) verlaufend am Schwenckopf (14) angebracht ist.

2. Maschine (10) nach Anspruch 1, **dadurch gekennzeichnet, dass** jedes Bearbeitungswerkzeug (T1, T2, T3) einen Eingriffsbereich (E1, E2, E3) aufweist, der mit dem Werkstück (L) in Bearbeitungseingriff bringbar ist, wobei die Werkzeugspindeln (16, 18) so am Schwenkkopf (14) angeordnet sind, dass der Eingriffsbereich (E1, E2, E3) wenigstens eines der daran gehaltenen Bearbeitungswerkzeuge (T1, T2, T3) um die Schwenkachse (B) einen radial äußeren Flugkreis (F) des Schwenkkopfs (14) definiert.

3. Maschine (10) nach Anspruch 2, **dadurch gekennzeichnet, dass** die Eingriffsbereiche (E1, E2, E3) aller Bearbeitungswerkzeuge (T1, T2, T3) im Wesentlichen den gleichen radialen Abstand zur Schwenkachse (B) besitzen.

4. Maschine (10) nach Anspruch 2 oder 3, **dadurch gekennzeichnet, dass** die Eingriffsbereiche (E1, E2, E3) der Bearbeitungswerkzeuge (T1, T2, T3) bezüglich der Schwenkachse (B) im Wesentlichen gleichmäßig voneinander winkelbeabstandet sind.

5. Maschine (10) nach einem der vorhergehenden Ansprüche, **dadurch gekennzeichnet, dass** wenigstens eine Werkzeugspindel (16) mit ihrer Werkzeug-Drehachse (D) quer zur Schwenkachse (B) verlaufend am Schwenkkopf (14) angebracht ist.

6. Maschine (10) nach Anspruch 5, **dadurch gekennzeichnet, dass** die Werkzeugspindel (16) mit der quer zur Schwenkachse (B) verlaufenden Werkzeug-Drehachse (D) an beiden Enden zur gleichachsigen Aufnahme jeweils eines Bearbeitungswerkzeugs (T1, T2) ausgebildet ist.

7. Maschine (10) nach einem der vorhergehenden Ansprüche, **dadurch gekennzeichnet, dass** ein Massenschwerpunkt des die Werkzeugspindeln (16, 18) tragenden Schwenkkopfs (14) auf oder nahe der Schwenkachse (B) liegt.

8. Maschine (10) nach einem der vorhergehenden Ansprüche, **dadurch gekennzeichnet, dass** zum Drehantrieb der Werkzeugspindel (18) mit der parallel zur Schwenkachse (B) verlaufenden Werkzeug-Drehachse (D') ein Riementrieb (96) vorgesehen ist, mit einem parallel zur Spindelwelle (88) angeordneten Spindelmotor (98), der über einen Riemen (100) mit der Spindelwelle (88) antriebsverbunden ist.

9. Maschine (10) nach Anspruch 8, **dadurch gekennzeichnet, dass** zur Spannung des Riemens (100) der Spindelmotor (98) relativ zur Spindelwelle (88) verschwenkbar gelagert ist.

10. Maschine (10) nach Anspruch 8 oder 9, **dadurch gekennzeichnet, dass** es sich bei dem Riemen (100) um einen Poly-V-Riemen handelt.

11. Maschine (10) nach einem der vorhergehenden Ansprüche, **dadurch gekennzeichnet, dass** die Werkstückspindel (12) zur Verstellung entlang der Linearachse (Z) an einem Z-Schlitten (124) angebracht ist, der mittels einer Führungsanordnung (126) an einem Maschinenbett (20) geführt und mittels eines Linearmotors (128) relativ zum Maschinenbett (20) bewegbar ist.

12. Maschine (10) nach Anspruch 11, **dadurch gekennzeichnet, dass** der Z-Schlitten (124) mittels an der Führungsanordnung (126) vorgesehenen Klemmelementen (138) relativ zum Maschinenbett (20) festlegbar ist.

13. Maschine (10) nach Anspruch 11 oder 12, **gekennzeichnet durch** eine Einrichtung (140) zum Gewichtsausgleich für den die Werkstückspindel (12) tragenden Z-Schlitten (124).

14. Maschine (10) nach Anspruch 13, **dadurch gekennzeichnet, dass** die Einrichtung (140) zum Gewichtsausgleich wenigstens einen Pneumatikzylinder (142) aufweist, der zwischen dem Z-Schlitten (124) und dem Maschinenbett (20) angeordnet und pneumatisch beaufschlagbar ist, um das Gewicht des die Werkstückspindel (12) tragenden Z-Schlittens (124) gegenzuhalten.

15. Maschine (10) nach einem der vorhergehenden Ansprüche, **dadurch gekennzeichnet, dass** der Schwenkkopf (14) mit einem Funktionselement (S) zur Erfassung der Werkstückgeometrie versehen ist.

## Claims

1. Machine (10) for processing of optical active surfaces on workpieces, comprising at least one workpiece spindle (12), by way of which a workpiece (L) to be processed is drivable for rotation about an axis (C) of workpiece rotation, and a pivot head (14), which is opposite the workpiece spindle (12) and which is pivotable about a pivot axis (B) and carries at least two tool spindles (16, 18), at each of which a respective processing tool (T1, T2, T3) is held to be drivable for rotation about an axis (D, D') of tool rotation, wherein the workpiece spindle (12) and the pivot head (14) are adjustable relative to one another along three mutually perpendicular linear axes (X, Y, Z) of which one linear axis (Y) extends parallel to the pivot axis (B), and wherein the axis (C) of workpiece rotation extends parallel to another linear axis (Z) of said linear axes (X, Y, Z), **characterized in that** at least one tool spindle (18) of said at least two tool spindles (16, 18) is mounted at the pivot head (14) with its axis (D') of tool rotation extending parallel to the pivot axis (B).

2. Machine (10) according to claim 1, **characterized in that** each processing tool (T1, T2, T3) has an engagement region (E1, E2, E3) which can be brought into processing engagement with the workpiece (L), wherein the tool spindles (16, 18) are so arranged at the pivot head (14) that the engagement region (E1, E2, E3) of at least one of the processing tools (T1, T2, T3) held thereat defines a radially outer circular locus (F) of the pivot head (14) about the pivot axis (B).

3. Machine (10) according to claim 2, **characterized in that** the engagement regions (E1, E2, E3) of all processing tools (T1, T2, T3) have substantially the same radial spacing from the pivot axis (B).

4. Machine (10) according to claim 2 or 3, **characterized in that** the engagement regions (E1, E2, E3) of the processing tools (T1, T2, T3) are substantially uniformly angularly spaced from one another with respect to the pivot axis (B).

5. Machine (10) according to any one of the preceding claims, **characterized in that** at least one tool spindle (16) is mounted on the pivot head (14) with its axis (D) of tool rotation extending transversely to the pivot axis (B).

6. Machine (10) according to claim 5, **characterized in that** the tool spindle (16) with the axis (D) of tool rotation extending transversely to the pivot axis (B) is constructed at both ends for coaxial mounting of a respective processing tool (T1, T2).

7. Machine (10) according to any one of the preceding claims, **characterized in that** a center of mass of the pivot head (14) carrying the tool spindles (16, 18) lies on or near the pivot axis (B).

8. Machine (10) according to any one of the preceding claims, **characterized in that** a belt drive (96) is provided for rotary drive of the tool spindle (18) with the axis (D') of tool rotation extending parallel to the pivot axis (B), the belt drive comprising a spindle motor (98) which is arranged parallel to the spindle shaft (88) and is in drive connection with the spindle shaft (88) by way of a belt (100).

9. Machine (10) according to claim 8, **characterized in that** the spindle motor (98) is mounted to be pivotable relative to the spindle shaft (88) for tensioning the belt (100).

10. Machine (10) according to claim 8 or 9, **characterized in that** the belt (100) is a poly-V belt.

11. Machine (10) according to any one of the preceding claims, **characterized in that** the workpiece spindle (12) is mounted on a Z slide (124) for adjustment along the linear axis (Z), the Z slide being guided at a machine bed (20) by means of a guide arrangement (126) and being movable by means of a linear motor (128) relative to the machine bed (20).

12. Machine (10) according to claim 11, **characterized in that** the Z slide (124) is fixable relative to the machine bed (20) by means of clamping elements (138) provided at the guide arrangement (126).

13. Machine (10) according to claim 11 or 12, **characterized by** a device (140) for weight compensation for the Z slide (124) carrying the workpiece spindle (12).

14. Machine (10) according to claim 13, **characterized in that** the device (140) for weight compensation comprises at least one pneumatic cylinder (142) which is arranged between the Z slide (124) and the machine bed (20) and can be acted on pneumatically so as to counter the weight of the Z slide (124) carrying the workpiece spindle (12).

15. Machine (10) according to any one of the preceding claims, **characterized in that** the pivot head (14) is provided with a functional element (S) for detecting the workpiece geometry.

## Revendications

1. Machine (10) pour l'usinage de surfaces optiquement actives sur des pièces, avec au moins une broche porte-pièce (12) par le biais de laquelle une pièce (L) à usiner peut être entraînée en rotation autour d'un axe de rotation de pièce (C), et une tête pivotante (14) située en face de la broche porte-pièce (12), qui peut être amenée à pivoter autour d'un axe de pivotement (B) et porte au moins deux broches porte-outil (16, 18) sur chacune desquelles au moins un outil d'usinage (T1, T2, T3) est maintenu de manière à pouvoir être entraîné en rotation autour d'un axe de rotation d'outil (D, D'), où la broche porte-pièce (12) et la tête pivotante (14) peuvent être réglées en outre l'une par rapport à l'autre le long de trois axes linéaires mutuellement perpendiculaires (X, Y, Z), parmi lesquels un axe linéaire (Y) s'étend parallèlement à l'axe de pivotement (B), et où l'axe de rotation de pièce (C) s'étend parallèlement à un autre axe linéaire (Z) des axes linéaires (X, Y, Z), **caractérisée en ce qu'**au moins une broche porte-outil (18) des au moins deux broches porte-outil (16, 18) est fixée à la tête pivotante (14) avec son axe de rotation d'outil (D') parallèle à l'axe de pivotement (B).

2. Machine (10) selon la revendication 1, **caractérisée en ce que** chaque outil d'usinage (T1, T2, T3) présente une zone d'engagement (E1, E2, E3) qui peut être amenée en engagement d'usinage avec la pièce (L), où les broches porte-outil (16, 18) sont disposées sur la tête pivotante (14) de telle sorte que la zone d'engagement (E1, E2, E3) d'au moins l'un des outils d'usinage (T1, T2, T3) maintenus sur celles-ci définit autour de l'axe de pivotement (B) une trajectoire radialement extérieure (F) de la tête de pivotement (14).

3. Machine (10) selon la revendication 2, **caractérisée en ce que** les zones d'engagement (E1, E2, E3) de tous les outils d'usinage (T1, T2, T3) possèdent sensiblement la même distance radiale à l'axe de pivotement (B).

4. Machine (10) selon la revendication 2 ou 3, **caractérisée en ce que** les zones d'engagement (E1, E2, E3) des outils d'usinage (T1, T2, T3) sont espacées angulairement les unes des autres de manière sensiblement uniforme par rapport à l'axe de pivotement (B).

5. Machine (10) selon l'une des revendications précédentes, **caractérisée en ce qu'**au moins une broche porte-outil (16) est fixée à la tête pivotante (14) avec son axe de rotation d'outil (D) s'étendant transversalement à l'axe de pivotement (B).

6. Machine (10) selon la revendication 5, **caractérisée en ce que** la broche porte-outil (16) est conçue aux deux extrémités pour recevoir coaxialement dans chaque cas un outil d'usinage (T1, T2) avec l'axe de rotation d'outil (D) s'étendant transversalement à l'axe de pivotement (B).

7. Machine (10) selon l'une des revendications précédentes, **caractérisée en ce qu'**un barycentre de la tête pivotante (14) portant les broches porte-outil (16, 18) est situé sur ou à proximité de l'axe de pivotement (B).

8. Machine (10) selon l'une des revendications précédentes, **caractérisée en ce qu'**un entraînement par courroie (96) est prévu pour l'entraînement en rotation de la broche porte-outil (18) avec l'axe de rotation d'outil (D') s'étendant parallèlement à l'axe de pivotement (B), avec un moteur de broche (98) disposé parallèlement à l'arbre de broche (88), qui est relié par entraînement à l'arbre de broche (88) par l'intermédiaire d'une courroie (100).

9. Machine (10) selon la revendication 8, **caractérisée en ce que** pour tendre la courroie (100) le moteur de broche (98) est monté pivotant par rapport à l'arbre de broche (88).

10. Machine (10) selon la revendication 8 ou 9, **caractérisée en ce que** la courroie (100) est une courroie Poly-V.

11. Machine (10) selon l'une des revendications précédentes, **caractérisée en ce que** la broche porte-pièce (12) est fixée à un coulisseau suivant Z (124) pour le réglage le long de l'axe linéaire (Z), qui est guidé au moyen d'un agencement de guidage (126) sur un bâti de machine (20) et peut être déplacé par rapport au bâti de machine (20) au moyen d'un moteur linéaire (128).

12. Machine (10) selon la revendication 11, **caractérisée en ce que** le coulisseau suivant Z (124) peut être fixé par rapport au bâti de machine (20) au moyen d'éléments de serrage (138) prévus sur l'agencement de guidage (126).

13. Machine (10) selon la revendication 11 ou 12, **caractérisée par** un dispositif (140) pour l'équilibrage de poids pour le coulisseau suivant Z (124) portant la broche porte-pièce (12).

14. Machine (10) selon la revendication 13, **caractérisée en ce que** le dispositif (140) pour l'équilibrage de poids présente au moins un vérin pneumatique (142) qui est disposé entre le coulisseau suivant Z (124) et le bâti de machine (20) et peut être chargé pneumatiquement pour contrebalancer le poids du coulisseau suivant Z (124) portant la broche porte-pièce (12).

15. Machine (10) selon l'une des revendications précédentes, **caractérisée en ce que** la tête pivotante (14) est munie d'un élément fonctionnel (S) pour la détection de la géométrie de la pièce.
